# FASCICULE DE BREVET EUROPEEN

(11) **EP 3 578 460 B1**
(45) Date de publication et mention de la délivrance du brevet: **28.09.2022**
(21) Numéro de dépôt: 19178272.1
(22) Date de dépôt: 04.06.2019
(51) Int. Cl.: B64C 25/10, B64C 25/40

(54) **ATTERRISSEUR D'AERONEF MUNI DE MOYENS DE ROUTAGE DE CABLES ET TUYAUX**
FAHRWERK EINES LUFTFAHRZEUGS, DAS MIT ROUTING-MITTELN FÜR KABEL UND LEITUNGEN AUSGESTATTET IST
AIRCRAFT LANDING GEAR PROVIDED WITH A MEANS FOR ROUTING CABLES AND PIPES

(30) Priorité: 04.06.2018 FR 1854843
(43) Date de publication de la demande: 11.12.2019
(73) Titulaire: Safran Landing Systems, 78140 Vélizy-Villacoublay (FR)
(72) Inventeur: PIZANA, Pierre, 77550 Moissy-Cramayel (FR); SERIGNAC, Yvain, 77550 Moissy-Cramayel (FR)
(74) Mandataire: Lavialle, Bruno François Stéphane

(56) Documents cités:
- FR-A1- 3 036 376
- J. WONG ET AL: "Design optimization of aircraft landing gear assembly under dynamic loading", STRUCTURAL AND MULTIDISCIPLINARY OPTIMIZATION, vol. 57, no. 3, 1 mars 2018 (2018-03-01), pages 1357-1375, XP055534667, Berlin/Heidelberg ISSN: 1615-147X, DOI: 10.1007/s00158-017-1817-y

## Description

L'invention concerne un atterrisseur d'aéronef muni de moyens de routage de câbles et tuyaux vers une partie basse de celui-ci.

### ARRIERE PLAN DE L'INVENTION

On connaît des atterrisseurs d'aéronef comportant une partie basse portant des roues et montée à coulissement dans un caisson, lui-même solidaire de la structure de l'aéronef. Il importe de faire descendre vers cette partie basse des tuyaux d'amenée de fluide hydraulique sous pression pour les freins, des câbles d'alimentation électrique pour les divers actionneurs présents sur la partie basse, et des câble porteurs de signaux de commandes ou de signaux d'indication, voire des bus de communication. Ces éléments descendent de la structure de l'aéronef vers le bas du caisson. Les éléments rigides, tels que les tuyaux d'alimentation en fluide, sont alors connectés à des éléments flexibles pour descendre vers la partie basse le long du caisson tout en étant compatibles avec les mouvements de celle-ci. Les atterrisseurs comportent en général un compas dont les branches sont articulées sur le caisson et la partie basse en étant articulées entre elles, et dont le rôle est de permettre le coulissement de la partie basse de l'atterrisseur relativement au caisson tout en bloquant toute rotation relative. Dans une thèse concernant l'optimisation de la conception des trains d'atterrissage (J.Wong : « Design optimization of aircraft landing gear assembly under dynamic loading », Structural and multidisciplinary optimization, vol.57, no.3, 1 mars 2018, pages 1357-1375, XP055534667, Berlin/Heidelberg), on profite de la présence du compas pour y fixer des supports guidant les éléments flexibles depuis le bas du caisson jusque vers la partie basse. Les éléments flexibles sont tenus de sorte à pouvoir fléchir lors du coulissement de la partie basse dans le caisson. Si nécessaire, on installe un faux compas du côté opposé au compas, dont le rôle est uniquement de porter des supports de guidage des éléments flexibles vers la partie basse.

Des développements sont maintenant en cours pour équiper les atterrisseurs d'un dispositif d'entraînement des roues pour faire tourner les roues alors que l'aéronef est au sol et ainsi déplacer l'aéronef sans avoir recours à ses groupes motopropulseurs. Ce dispositif d'entraînement comporte un ou des moteurs électriques de puissance conséquente, qui requièrent une alimentation électrique et des câbles de signaux pour sa commande. Le dispositif peut lui-même être mobile entre une position dégagée des roues et une position engagée avec les roues, ce qui nécessite une arrivée de fluide hydraulique pour alimenter un actionneur de déplacement du dispositif d'entraînement. Ce dispositif d'entraînement nécessite donc l'arrivée d'un nombre conséquent d'éléments flexibles, en plus de ceux nécessaires à la gestion des freins.

### OBJET DE L'INVENTION

L'invention vise à proposer une nouvelle façon de guider des éléments flexibles tels que des câbles d'alimentation, des câbles de signaux, des tuyaux hydrauliques vers une partie basse coulissante d'un atterrisseur.

### PRESENTATION DE L'INVENTION

En vue de la réalisation de ce but, on propose un atterrisseur d'aéronef comportant un caisson destiné à être solidarisé à une structure de l'aéronef et comportant une partie basse portant au moins une roue et montée à coulissement dans le caisson selon un axe de coulissement, un compas comportant deux branches articulées entre elles dont l'une est articulée sur le caisson et l'autre sur la partie basse, et une pluralité d'éléments tels que des câbles d'alimentation électrique, des câbles porteurs de signaux électriques, des tuyaux hydrauliques... descendant le long du caisson pour aboutir à la partie basse, tous ces éléments étant flexibles entre une extrémité inférieure du caisson et la partie basse de l'atterrisseur. Selon l'invention, l'atterrisseur comporte en outre un premier support mobile ayant une extrémité proximale articulée sur l'extrémité inférieure du caisson selon un axe d'articulation perpendiculaire à l'axe de coulissement et une extrémité distale portant un râtelier muni d'orifices pour recevoir et guider les éléments flexibles, et un deuxième support mobile ayant une extrémité proximale articulée sur la partie basse de l'atterrisseur selon un axe d'articulation perpendiculaire à l'axe de coulissement et une extrémité distale portant un râtelier pour recevoir et guider les éléments flexibles.

Ainsi, les éléments flexibles sont libres de fléchir selon leur propre raideur, les râteliers ne faisant qu'accompagner le fléchissement des éléments flexibles tout en contraignant les éléments flexibles à fléchir dans un plan perpendiculaire aux axes d'articulation, ce qui les empêchent de se toucher. Contrairement à des branches d'un compas qui sont articulées entre elles et qui imposent donc leur mouvement aux éléments flexibles, ici ce sont les éléments flexibles qui imposent leur mouvement aux supports mobiles articulés. La courbure adoptée par les éléments flexibles pourra dès lors évoluer au cours du temps, en fonction des mouvements de l'aéronef ou des chocs qu'il subit, ou encore du vieillissement des éléments flexibles.

Selon une disposition particulière de l'invention, chaque râtelier comporte une platine percée d'orifices de guidage des éléments flexibles et montée pivotante sur le support mobile associé selon un axe de pivotement parallèle à l'axe d'articulation du support mobile.

L'invention s'applique également à un atterrisseur dont la partie basse est munie d'un dispositif d'entraînement des roues, le deuxième support mobile étant alors directement articulé sur le dispositif d'entraînement des roues.

### DESCRIPTION DES FIGURES

L'invention sera mieux comprise à la lumière de la description qui suit d'un mode particulier de réalisation de l'invention, en référence aux figures des dessins annexés, parmi lesquelles :
- la figure 1 est une vue en perspective arrière d'un atterrisseur comportant une partie basse coulissante équipée d'un dispositif d'entraînement des roues, l'atterrisseur étant illustré en position détendue avec le dispositif d'entraînement des roues en position dégagée ;
- la figure 2 est un vue de côté de l'atterrisseur de la figure 1, dans la même position ;
- la figure 3 est une vue analogue à celle de la figure 2, l'atterrisseur étant illustré en position compressée avec le dispositif d'entraînement des roues en position engagée.

### DESCRIPTION DETAILLEE DE L'INVENTION

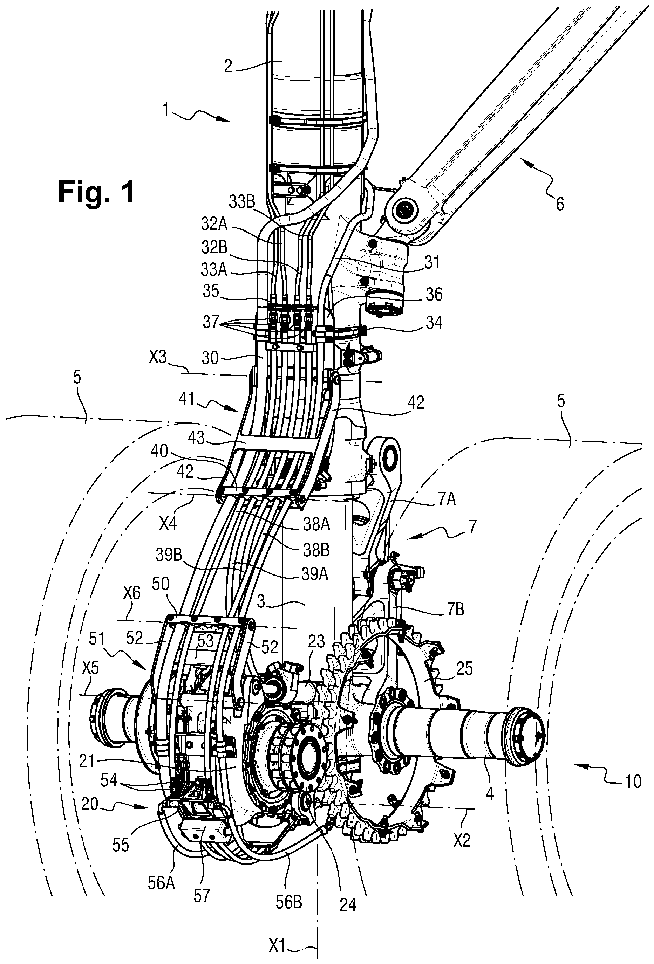

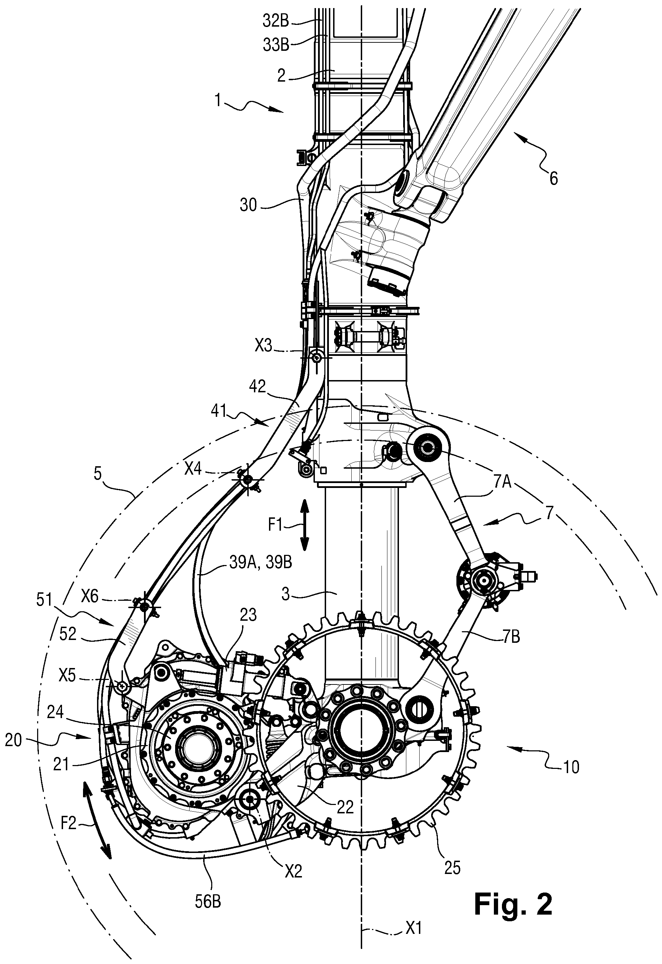

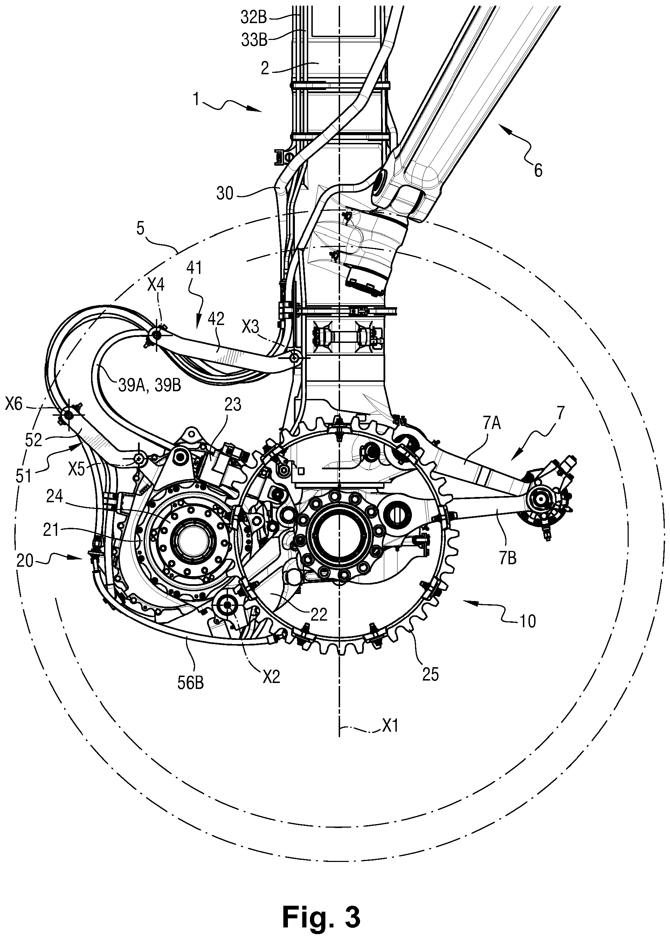

En référence aux figures, l'invention s'applique à un atterrisseur d'aéronef 1 comportant un caisson 2 articulé sur la structure de l'aéronef et dans lequel une tige 3 d'un amortisseur est montée à coulissement selon un axe de coulissement X1. La tige 3 porte à sa partie inférieure un essieu 4 destiné à recevoir des roues 5, ici équipées d'un dispositif de freinage (non représenté). La tige 3 et les roues 5 forment la partie basse 10 de l'atterrisseur 1, mobile selon la flèche F1 de la figure 2. Une contrefiche 6 stabilise le caisson 2 dans la position déployée illustrée ici. Un compas 7 comportant deux branches 7A,7B articulées entre elles, dont une branche supérieure 7A articulée sur le caisson 2 et une branche inférieure 7B articulée sur la tige 3 autorise le coulissement de la partie basse 10 relativement au caisson 2, tout en empêchant tout pivotement de la partie basse 10. Ici, la partie basse 10 est équipée d'un dispositif d'entraînement 20 des roues comportant un moteur 21 monté articulé selon un axe X2 perpendiculaire à l'axe X1 sur un support 22 fixé à la tige 3. Un actionneur linéaire 23, ici un vérin hydraulique, est attelé entre la tige 3 et le dispositif d'entraînement 20 pour déplacer celui-ci (selon la flèche F2 de la figure 2) entre une position engagée visible à la figure 3 dans laquelle un pignon à rouleaux 24 entraîné par le moteur 21 coopère avec une couronne 25 solidaire de l'une des roues 5 pour l'entraîner en rotation, et une position dégagée visible aux figures 1 et 2 dans laquelle le pignon à rouleaux 24 est éloigné de la couronne 25.

Divers câbles et tuyaux descendent le long du caisson 2 vers la partie basse 10 pour être connectés aux dispositifs portés par la partie basse 10, dont le dispositif d'entraînement 20 et le dispositif de freinage (non représenté ici). On distingue sur les figures :
- un câble électrique de puissance 30 flexible pour alimenter le moteur 21 du dispositif d'entraînement 20 ;
- un câble électrique de signaux 31 flexible pour remonter des signaux en provenance de divers capteurs équipant le dispositif d'entraînement 20 et/ou des signaux de gestion de l'atterrisseur, tels que la pression des pneumatiques, la température des freins... ;
- des tuyaux rigides 32A,32B de fluide hydraulique (un tuyau d'alimentation en fluide sous pression et un tuyau de retour) à destination de l'actionneur de déplacement 23 ;
- des tuyaux rigides 33A, 33B de fluide hydraulique sous pression à destination des freins du dispositif de freinage des roues.

Comme cela est visible à la figure 2, les câbles électriques 30,31 sont tenus par un collier 34 serré autour du caisson 2, tandis que les tuyaux hydrauliques rigides 32A,32B,33A,33B aboutissent à une platine 35 venue de matière avec un support fixe 36 qui est solidarisé au caisson 2. Des connecteurs 37 permettent de connecter les tuyaux hydrauliques rigides 32A,32B,33A,33B à des tuyaux souples respectifs 38A,38B,39A,39B.

L'invention est relative à la façon dont ces éléments flexibles sont descendus jusqu'à la partie basse 10 de l'atterrisseur. Plus précisément, les câbles 30,31 et les tuyaux souples 38A,38B,39A,39B descendent vers la partie basse 10 en étant reçus et guidés par un premier râtelier 40 porté par un premier support en H mobile 41 qui comporte deux bras 42 reliés par une traverse 43. Plus précisément, le premier râtelier 40 est porté aux extrémités distales des bras 42 dont les extrémités proximales sont articulées selon un axe X3 sur le bas du support fixe 36, donc sur l'extrémité inférieure du caisson 2. Ici, le premier râtelier 40 comporte une platine percée d'orifices de guidage et montée pivotante sur les bras 42 selon un axe X4 parallèle à l'axe X3.

Les tuyaux flexibles 38A,38B sont ici connectés directement à l'actionneur 23 au sortir du premier râtelier 40. Les tuyaux flexibles 39A,39B, et les câbles 30,31 sont quant à eux reçus et guidés par un deuxième râtelier 50 porté par un deuxième support en H mobile 51 qui comporte deux bras 52 reliés par une traverse 53. Plus précisément, le deuxième râtelier 50 est porté aux extrémités distales des bras 52 dont les extrémités proximales sont articulées sur la partie basse du caisson, en l'occurrence ici directement articulées sur le dispositif d'entraînement 20. Ici, le deuxième râtelier 50 comporte une platine percée d'orifices de guidage et monté pivotante sur les bras 52 selon un axe X6 parallèle à l'axe X5. Ici, les axes X3,X4,X5,X6 sont parallèles entre eux et tous perpendiculaires à l'axe de coulissement X1. Les tuyaux flexibles 39A,39B aboutissent à une platine 55 portée par le dispositif d'entraînement 20 pour être connectés, via des connecteurs 54, à des tuyaux flexibles 56A, 56B qui passent sous le dispositif d'entraînement 20 et qui alimentent les freins. Le câble de signaux 31 est connecté à un boîtier de connexion 57 du dispositif d'entraînement 20, tandis que le câble de puissance 30 est connecté directement au moteur 21.

L'utilisation de deux râteliers portés par des supports articulés pour guider les éléments flexibles autorise lesdits éléments flexibles à adopter une forme en boucle essentiellement donnée par l'élément flexible le plus raide. On voit sur la figure 2 la situation où l'atterrisseur est en position détendue et le dispositif d'entraînement 20 en position dégagée, donc la situation où la platine 55 et le boîtier de connexion 57 sont le plus éloignés de la platine 35 du caisson 2, et sur la figure 3 la situation où l'atterrisseur est en position complètement compressée (par exemple si l'amortisseur est dégonflé) et le dispositif d'entraînement 20 en position engagée, donc la situation où la platine 55 et le boîtier de connexion 57 sont le plus rapprochés de la platine 35 du caisson 2. Les éléments flexibles peuvent alors se courber dans des plans parallèles, en étant guidés par les râteliers 40,50 dont les supports articulés 41,51 se contentent d'accompagner la courbure naturelle des éléments flexibles, sans la contraindre.

L'invention n'est pas limitée à ce qui vient d'être décrit, mais englobe au contraire toute variante entrant dans le cadre défini par les revendications. En particulier, bien qu'ici les râteliers 40,50 soient montés articulés sur les supports mobiles 41,51, ils pourront être fixés à ces derniers.

Bien qu'ici l'invention ait été appliquée à un atterrisseur muni d'un dispositif d'entraînement des roues, l'invention pourra bien entendu s'appliquer à un atterrisseur sans dispositif d'entraînement, le deuxième support mobile restant articulé sur la partie basse, par exemple directement sur la tige coulissante ou, si l'atterrisseur est équipé d'un bogie, sur le balancier du bogie.

## Revendications

1. Atterrisseur d'aéronef comportant un caisson (2) destiné à être solidarisé à une structure de l'aéronef et comportant une partie basse (10) portant au moins une roue (5) et montée à coulissement dans le caisson selon un axe de coulissement (X1), un compas (7) comportant deux branches (7A, 7B) articulées entre elles dont l'une (7A) est articulée sur le caisson (2) et l'autre (7B) est articulée sur la partie basse (10), et une pluralité d'éléments tels que des câbles d'alimentation électrique (30), des câbles porteurs de signaux électriques (31), des tuyaux hydrauliques (38A,38B,39A,39B) descendant le long du caisson pour aboutir à la partie basse, tous ces éléments étant flexibles entre une extrémité inférieure du caisson et la partie basse de l'atterrisseur, **caractérisé en ce que** l'atterrisseur comporte en outre un premier support mobile (41) ayant une extrémité proximale articulée sur l'extrémité inférieure du caisson selon un axe d'articulation (X3) perpendiculaire à l'axe de coulissement et une extrémité distale portant un râtelier (40) muni d'orifices pour recevoir et guider les éléments flexibles, et un deuxième support mobile (51) ayant une extrémité proximale articulée sur la partie basse de l'atterrisseur selon un axe d'articulation (X5) perpendiculaire à l'axe de coulissement et une extrémité distale portant un râtelier (50) pour recevoir et guider les éléments flexibles.

2. Atterrisseur selon la revendication 1, dans lequel au moins un râtelier (40,50) comporte une platine percée d'orifices de guidage des éléments flexibles et montée pivotante sur le support mobile associé selon un axe de pivotement (X4,X6) parallèle à l'axe d'articulation du support mobile.

3. Atterrisseur selon la revendication 1, dont la partie basse est équipée d'un dispositif d'entraînement (20) des roues en rotation, et dans lequel le deuxième support mobile (51) est directement articulé sur le dispositif d'entraînement.

## Patentansprüche

1. Luftfahrzeugfahrwerk, das ein Gehäuse (2) umfasst, das dazu bestimmt ist, fest mit einer Struktur des Luftfahrzeugs verbunden zu werden, und das einen unteren Teil (10) umfasst, der mindestens ein Rad (5) trägt und in dem Gehäuse entlang einer Verschiebungsachse (X1) verschiebbar gelagert ist, eine Kniehebelanordnung (7), die zwei aneinander angelenkte Schenkel (7A, 7B) umfasst, von denen einer (7A) an dem Gehäuse (2) angelenkt ist und der andere (7B) an dem unteren Teil (10) angelenkt ist, und eine Vielzahl von Elementen, wie z. B. Stromversorgungskabel (30), Kabel (31) für elektrische Signale, Hydraulikschläuche (38A, 38B, 39A, 39B), die entlang des Gehäuses hinunterlaufen, um am unteren Teil zu enden, wobei alle diese Elemente zwischen einem unteren Ende des Gehäuses und dem unteren Teil des Fahrwerks flexibel sind, **dadurch gekennzeichnet, dass** das Fahrwerk ferner einen ersten beweglichen Träger (41) umfasst, der ein proximales Ende hat, das an dem unteren Ende des Gehäuses um eine Gelenkverbindungsachse (X3) angelenkt ist, die senkrecht zur Verschiebungsachse ist, und ein distales Ende, das einen Rahmen (40) trägt, der mit Öffnungen versehen ist, um die flexiblen Elemente aufzunehmen und zu führen, und einen zweiten beweglichen Träger (51), der ein proximales Ende hat, das an dem unteren Teil des Fahrwerks um eine Gelenkverbindungsachse (X5) angelenkt ist, die senkrecht zur Verschiebungsachse ist, und ein distales Ende, das einen Rahmen (50) trägt, um die flexiblen Elemente aufzunehmen und zu führen.

2. Fahrwerk nach Anspruch 1, bei dem mindestens ein Rahmen (40, 50) eine Platte umfasst, die mit Führungslöchern zum Führen der flexiblen Elemente durchsetzt und schwenkbar an dem dazugehörigen beweglichen Träger um eine Schwenkachse (X4, X6) gelagert ist, die parallel zur Gelenkverbindungsachse des beweglichen Trägers ist.

3. Fahrwerk nach Anspruch 1, dessen unterer Teil mit einer Antriebsvorrichtung (20) zum Rotationsantrieb der Räder ausgestattet ist und bei dem der zweite bewegliche Träger (51) direkt an der Antriebsvorrichtung angelenkt ist.

## Claims

1. Aircraft landing gear comprising a strut leg (2) for securing to a structure of the aircraft and including a bottom portion (10) carrying at least one wheel (5) and mounted to slide in the strut leg along a sliding axis (X1), a scissors linkage 7 comprising two hinged-together branches 7A and 7B, one of which being hinged to the strut leg (2) and the other being hinged to the bottom portion (10), and a plurality of elements such as power electric cables (30), signal-carrying electric cables (31), hydraulic pipes (38A, 38B, 39A, 39B) going down along the strut leg in order to terminate at the bottom portion, all of these elements being flexible between a bottom end of the strut leg and the bottom portion of the landing gear, the landing gear being **characterized in that** it includes a first movable support (41) having a proximal end hinged to the bottom end of the strut leg about a hinge axis (X3) perpendicular to the sliding axis and a free distal end carrying a rack (40) provided with orifices for receiving and guiding the flexible elements, the landing gear including a second movable support (51) having a proximal end hinged to the bottom portion of the landing gear about a hinge axis (X5) perpendicular to the sliding axis and a free distal end carrying a rack (50) for receiving and guiding the flexible elements.

2. Landing gear according to claim 1, wherein at least one rack (40, 50) comprises a plate that is pierced by orifices for guiding the flexible elements and that is pivotally mounted on the associated movable support to pivot about a pivot axis (X4, X6) parallel to the hinge axis of the movable support.

3. Landing gear according to claim 1, wherein its bottom portion is provided with a drive device (20) for driving wheels in rotation, and wherein the second movable support (51) is hinged directly to the drive device.
